Europäisches Patentamt

European Patent Office

Office européen des brevets

(19)

(11) Veröffentlichungsnummer : **0 120 431**
**B1**

(12)

# EUROPÄISCHE PATENTSCHRIFT

(45) Veröffentlichungstag der Patentschrift :
27.05.87

(21) Anmeldenummer : 84102974.7

(22) Anmeldetag : 17.03.84

(51) Int. Cl.⁴ : **B 23 K 35/40**, B 21 C 25/00

(54) Verfahren und Vorrichtung zum Aufbereiten gebrauchter Punktschweisselektroden.

(30) Priorität : 23.03.83 DE 3310423

(43) Veröffentlichungstag der Anmeldung :
03.10.84 Patentblatt 84/40

(45) Bekanntmachung des Hinweises auf die Patenterteilung : 27.05.87 Patentblatt 87/22

(84) Benannte Vertragsstaaten :
**BE DE FR GB IT NL SE**

(56) Entgegenhaltungen :
**CH-A-    349 354**
**DD-A-    152 922**
**DE-A- 1 440 449**
**DE-B- 1 057 704**

(73) Patentinhaber : **Kaeseler, Werner**
**Meisenweg 8**
**D-3507 Baunatal-Altenritte (DE)**

(72) Erfinder : **Kaeseler, Werner**
**Meisenweg 8**
**D-3507 Baunatal-Altenritte (DE)**

(74) Vertreter : **Hanewinkel, Lorenz, Dipl.-Phys.**
**Patentanwalt Ferrariweg 17a**
**D-4790 Paderborn (DE)**

## Beschreibung

Die Erfindung betrifft ein Verfahren zum Aufbereiten gebrauchter Punktschweißelektroden für das Widerstandsschweißen, bei dem diese jeweils in ein Umformwerkzeug gepreßt werden, das aus einem Gesenk mit einer Aussparung besteht, dessen Querschnitt der Punktschweißelektrode entspricht.

Infolge des beim Punktschweißen auf die Punktschweißelektroden ausgeübten Drucks und der hohen auftretenden Temperaturen wird die Arbeitsfläche der Elektroden allmählich deformiert, insbes. im Sinne einer Querschnittsverbreiterung am Ende der zumeist kegeligen, zylindrischen, gewölbten oder halbrunden Elektrodenspitzen. Dies gilt auch dann, wenn anstelle fest montierter Schweißelektroden austauschbare, häufig kappenförmige Elektroden verwendet werden, die auf entsprechenden Elektrodenhaltern des Schweißgeräts auswechselbar befestigt sind. Derartige Oberflächendeformationen haben ein schlechtes Schweißergebnis und damit eine schlechte Bauteilqualität sowie ein starkes Spritzen beim Schweißvorgang zur Folge. Infolgedessen müssen derartige Elektroden ausgebaut und gegen neue Elektroden ausgewechselt werden.

Bisher stellen insbes. kappenförmige Punktschweißelektroden dieser Art ein Wegwerfprodukt dar. Sie werden nach einer bestimmten Anzahl von z. B. 2 000 bis 15 000 Punkten ausgewechselt und als Schrott abgegeben. Dadurch entstehen beträchtliche Betriebskosten.

Es ist aus FR-A-936 105 bekannt, Punktschweißelektroden mit einem Umformwerkzeug zu regenerieren, indem die Elektrode, ohne diese aus der Schweißmaschine herauszunehmen, in eine ringförmige Gesenkform, deren Querschnitt der vorgegebenen Kontur der nachzuarbeitenden Elektroden entspricht, hineingepreßt wird, wobei die ringförmige Gesenkform um die Elektrode gedreht wird. Hierbei ist zwar eine Wiederherstellung der Gestalt der Elektrode zu erreichen, jedoch wird der vorherige Oberflächenaufbau zerstört, und es entsteht eine anisotrope Kupferoberfläche.

Außerdem ist bei diesem Verfahren das manuelle Drehen der Gesenkform wegen der großen auftretenden Reibungskräft äußerst schwierig, und es kann andererseits die erwünschte Form der aufbereiteten Schweißelektrode allenfalls nach einer Vielzahl von Umdrehungen der Gesenkform einigermaßen reproduziert werden. Außerdem ist die Anwendung dieses bekannten Verfahrens in Schweiß- bzw. Transferstraßen nicht ohne weiteres möglich. Schließlich ist die Qualität der auf diese Weise aufbereiteten Punktschweißelektroden sehr schlecht.

Beim Rollennahtschweißen ist es bereits bekannt, die an kontinuierlich gedrehten Elektrodenrollen entstehenden Grate mit Hilfe von Rollen, die ständig auf die Schweißoberflächen einwirken, zu beseitigen bzw. an ihrer Entstehung zu hindern (GB-PS 282 960). Diese Verfahrensweise kann jedoch nicht auf die Punktschweißtechnik übertragen werden.

Es ist weiterhin bekannt, gebrauchte Punktschweißelektroden durch spanende Bearbeitungsverfahren wie Drehen, Feilen oder Fräsen aufzubereiten. Dabei werden die abgeflachten und verbreiterten Arbeitsflächen durch spanende Bearbeitung wieder in den Ausgangszustand zurückgeführt. Auch solche Aufbereitungsverfahren haben bisher nicht zu brauchbaren Ergebnissen geführt. Außerdem sind sie in wirtschaftlicher Hinsicht nicht sinnvoll.

Es ist ferner bekannt (« Schweißtechnik » 1968, H.1, S. 17-20), daß für die Ermittlung der Standzeit von Punktschweißelektroden die bei den jeweils ersten 1 000 Schweißpunkten auftretende Kaltverfestigung der Kontaktflächen zu berücksichtigen ist und daß die Standzeiten für Elektroden aus Kupfer-Chrom-Legierungen wesentlich verbessert werden können, wenn die Elektroden nicht spanabhebend, sondern kaltfließgepreßt hergestellt werden. Schließlich ist bekannt (« DVS-Berichte Band 70 » 1981, S. 85-100), Elektrodenkappen durch Fließpressen herzustellen. Zur Aufbereitung gebrauchter Punktschweißelektroden sind derartige Verfahren bisher nicht eingesetzt worden.

Weiterhin ist es aus DD-A-152 922 bekannt, Schweißelektroden in einem Preßwerkzeug herzustellen, indem ein Stempel in einen zylindrischen Kupferkörper eingepreßt wird, der mit seinem Frontteil in einem Gesenk gehalten ist und der seitlich von einer zum Stempel axialverschieblich gehaltenen Umfassung umgeben ist. Diese Vorrichtung ist jedoch wegen der bei gebrauchten Schweißkappen häufig vorliegenden Exzentrizität zwischen der inneren Bohrung und der Außenfläche für deren Aufbereitung nicht verwendbar, da durch eine Exzentrizität beim Pressen so hohe Seitenkräfte auftreten können, daß der Stempel zerstört wird.

Der Erfindung liegt die Aufgabe zugrunde, das Verfahren und die Vorrichtung der eingangs bezeichneten Gattung dahingehend weiterzuentwickeln, daß eine möglichst wirtschaftliche Aufbereitung von Punktschweißelektroden erfolgt, die aufbereiteten Punktschweißelektroden qualitativ zu neuen annähernd gleich sind und bei den Schweißungen beschichteter Bleche mit den aufbereiteten Punktschweißelektroden, die Beschichtung der Bleche weitgehend erhalten bleibt, indem die durch den vorhergehenden Gebrauch auf und/oder unmittelbar unter der wirksamen Arbeitsfläche aufgebauten Diffusions- und Legierungsschichten weitgehend erhalten bleiben und weiter die Arbeitsfläche bilden.

Das erfindungsgemäße Verfahren kennzeichnet sich dadurch, daß das für seine Durchführung erforderliche Gesenk eine Matrize ist, deren Aussparung vollständig mit der äußeren erwünschten Form der aufbereiteten Punktschweißelektrode übereinstimmt. und ein Stempel mit einem Kopf, dessen Außenform einer Blindbohrung in der Punktschweißelektrode angepaßt ist, sich zentrierend in die Blindbohrung eingeführt wird und dann die Punktschweißelektrode mit dem Stempel. sich in der Matrize zentrierend, in diese gepreßt wird.

Erfindungsgemäß besteht eine Vorrichtung zum Aufbereiten gebrauchter Punktschweißelektroden aus einer Presse, in der in einem Umformwerkzeug ein Stempel, der einen Kopf hat, dessen Form einer Blindbohrung in der Punktschweißelektrode entspricht, und in der eine Matrize, die eine Aussparung hat, die der Außenform der erwünschten Elektrodenform entspricht angeordnet ist, wobei der Stempel seitlich schwimmend gelagert ist und zwar um ein solches Spiel, daß einer maximalen Exzentrizität der Blindbohrung gegenüber der Außenform der gebrauchten Punktschweißelektrode entspricht.

Die Erfindung bringt den Vorteil mit sich, daß die aufbereiteten Punktschweißelektroden nicht nur mit neuen Punktschweißelektroden vergleichbar sind, bzw. sogar noch bessere Schweißergebnisse als diese liefern, sondern im Gegensatz zu den auf andere Weise aufbereiteten Punktschweißelektroden auch bis zu zehnmal aufbereitet und wiederverwendet werden können.

Außerdem können mit der erfindungsgemäßen Vorrichtung pro Stunde einige hundert gebrauchte Elektroden aufbereitet werden, so daß das erfindungsgemäße Verfahren große wirtschaftliche Vorteile bietet.

Der Erfindung liegt die Erkenntnis zugrunde, daß beim Gebrauch von Punktschweißelektroden komplizierte chemische und/oder metallurgische Prozesse auftreten und daß es dabei weniger auf die durch Formgebung erzielbare Kaltverfestigung, sondern vielmehr auf solche Diffusionsoder Legierungsschichten ankommt, die sich beim Schweißvorgang unmittelbar auf bzw. wenige Mikrometer unterhalb der wirksamen, d. h. beim Schweißvorgang aktiven Arbeitsfläche der Elektrode bilden. Hierbei handelt es sich im wesentlichen um in die Arbeitsfläche dringendes Eisen, Aluminium und/oder Zink und um Kohlenstoff, der sich auf der Arbeitsfläche ablagert. Die Erfindung sieht daher vor, diese Schichten beim Aufbereiten der Elektroden zu erhalten und den Umformvorgang so ablaufen zu lassen, daß diese Schichten auch nach dem Aufbereiten der Elektrode auf bzw. dicht unterhalb der dann aktiven Arbeitsfläche liegen. Die erwähnten Elemente können dabei auch in oxidischer Form vorliegen.

Die Erfindung wird nachfolgend in Verbindung mit der beiliegenden Zeichnung an einem Ausführungsbeispiel näher erläutert. Es zeigen :

Figuren 1 bis 6  Schnitte durch einige Elektroden, die nach dem erfindungsgemäßen Verfahren aufbereitet werden können ;

Figur 7  eine erfindungsgemäße Vorrichtung zum Aufbereiten der Elektrodenkappen nach Fig. 1 bis 5 ;

Figur 8  eine abgewandelte Ausführungsform der Vorrichtung nach Fig. 7 ; und

Figuren 9 bis 14  schematisch die erfindungsgemäße Aufbereitung gebrauchter Elektrodenkappen.

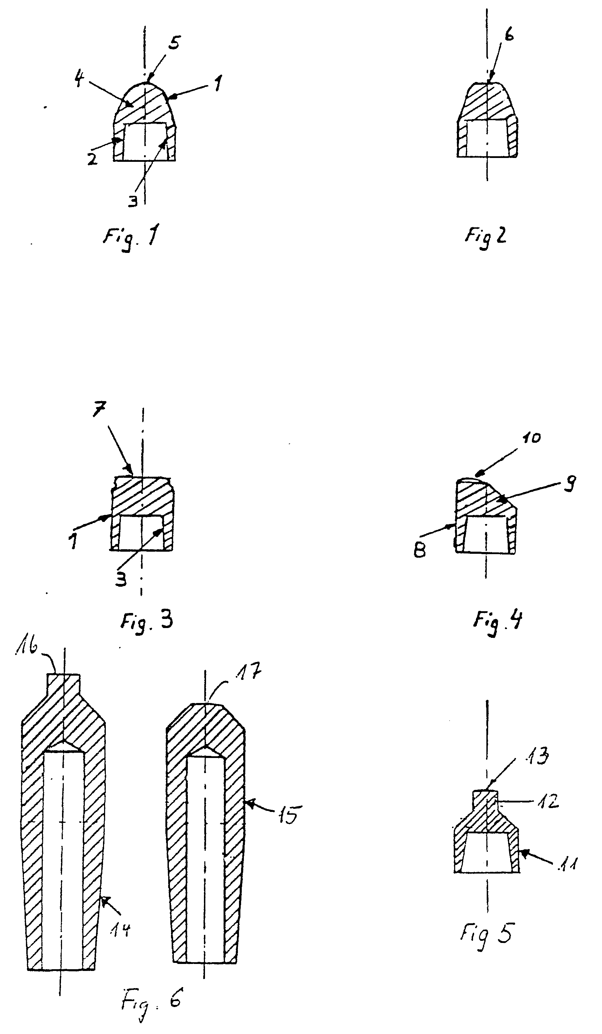

Fig. 1 zeigt eine besonders typische und häufig verwendete Elektrodenkappe 1, die aus einer Kupfer/Chrom/Zirkon-Verbindung besteht. Sie enthält einen im wesentlichen zylindrischen Schaft 2, der auf den nicht dargestellten Elektrodenhalter (Elektrodenschaft) eines Schweißgeräts aufgesetzt und auf übliche Weise durch seine innenliegende, konische oder zylindrische Bohrung 3 oder lediglich durch eine Innenbohrung des Elektrodenschafts hindurch mit Wasser od. dgl. gekühlt wird. Das freie Ende des Schafts 2 besitzt einen halbkugelförmigen Ansatz 4, dessen äußere Spitze die Arbeitsfläche 5 der Elektrodenkappe bildet. Gemäß Fig. 2 kann die äußere Spitze abgeflacht sein, um eine kreisförmige Arbeitsfläche 6 auszubilden.

Fig. 3 zeigt eine gebrauchte Elektrodenkappe 7, die sich nach beispielsweise zweitausend bis fünfzehntausend Punkten aus den Elektrodenkappen nach Fig. 1 oder 2 ergibt. Sie besitzt eine durch Druck und Temperatur erheblich abgeflachte und verbreiterte Arbeitsfläche 7, die beim Schweißvorgang zum Spritzen neigt und keine ausreichend guten Schweißlinsen mehr erzeugt.

Fig. 4 zeigt eine weitere Elektrodenkappe 8, die sich von den Elektrodenkappen nach Fig. 1 bis 3 im wesentlichen durch einen Ansatz 9 mit einer nahezu ebenen, exzentrisch liegenden Arbeitsfläche 10 unterscheidet. Fig. 5 zeigt eine Elektrodenkappe 11, die an ihrem freien Ende einen kurzen, zylindrischen Ansatz 12 aufweist, dessen äußeres Ende eine kreisrunde Arbeitsfläche 13 bildet. Daneben gibt es eine Vielzahl weiterer Formen von Elektrodenkappen, die je nach Anwendungsfall unterschiedliche Ansätze und Arbeitsflächen aufweisen und aufgrund der Abnutzung der Arbeitsflächen nach einer bestimmten Anzahl von Punkten ausgewechselt werden müssen.

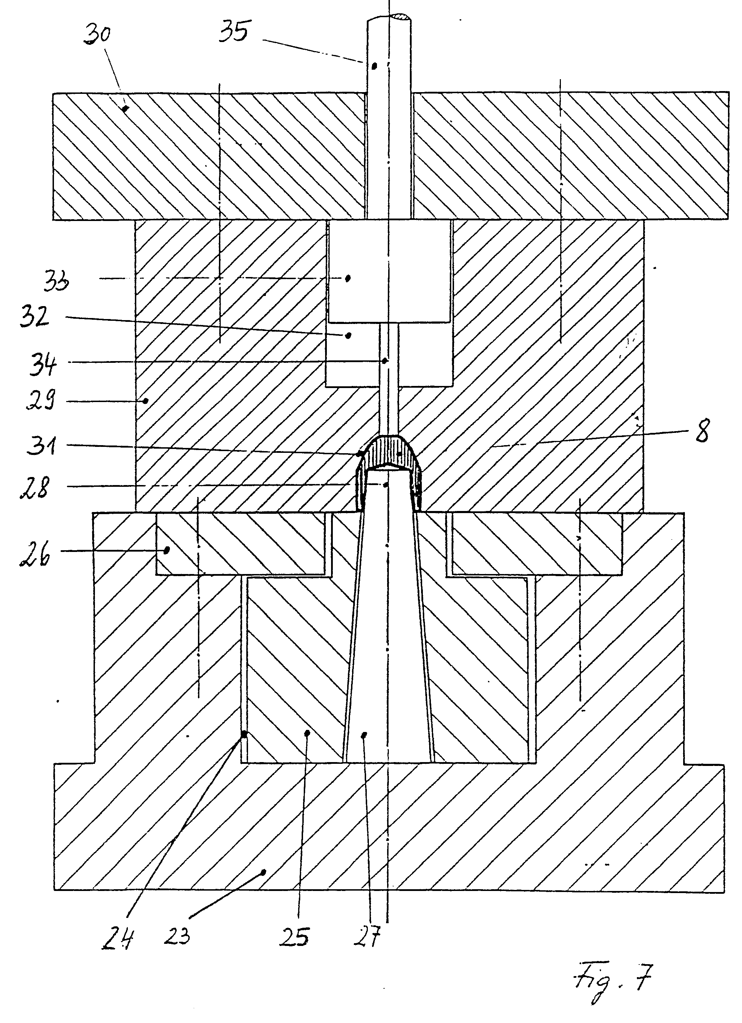

Anstelle der dargestellten Elektrodenkappen können auch Spezialelektroden 14, 15 (Fig. 6) wesentlich größerer Länge vorgesehen sein, deren Arbeitsflächen 16, 17 sich jedoch in entsprechender Weise abnutzen und die mit zylindrischen, zur Aufnahme von Kühlrohren bestimmten Bohrungen versehen sind. Außerdem sind in Abhängigkeit von allen zu verbindenden Werkstoffen eine Vielzahl anderer als Kupfer/Chrom/Zirkon-Legierungen möglich.

Fig. 7 zeigt eine erfindungsgemäße Vorrichtung zum Aufbereiten der gebrauchten Elektrodenkappen nach Fig. 3 durch Umformen. Diese Vorrichtung enthält als Hauptbestandteil eine Presse, wie sie bei der bildsamen Formung von Metallen für die dabei erforderlichen Formänderungsarbeiten üblicherweise benutzt wird. Dabei kann es sich um eine hydraulische oder um eine mechanische Exzenter- oder Kurbelpresse oder um eine Fließpreßmaschine handeln. Sie enthält beispielsweise einen nicht dargestellten Stößel, der von einem ebenfalls nicht dargestellten Exzenter- oder Kurbelgetriebe hin- und herbewegbar ist und eine Stempelhalteplatte 23 trägt. Die Stempelhalteplatte 23 weist eine Aussparung 24 auf, in der eine Stempelaufnahme 25 schwimmend gelagert und mittels eines Halterings 26 festgelegt ist. In der Stempelaufnahme 25 ist ein Stempel 27 gehalten, dessen den Haltering 26 überragender Kopf 28 einen Außenquerschnitt besitzt, der der bis zum Ansatz 4 verlaufenden Innenbohrung 3 der aufzubereitenden Elektrodenkappe 1 entspricht.

Dem Stempel 27 liegt eine Matrize 29 gegenüber, die an einer z. B. ortsfesten Grundplatte 30 befestigt ist und an ihrer dem Stempel 27 zugewandten Seite eine Aussparung 31 aufweist, deren Form genau derjenigen Form entspricht, die die Außenkontur der aufzubereitenden Elektrodenkappe 1 erhalten soll. In einem rückwärtigen Teil der Matrize 29 ist eine Ausnehmung 32 vorgesehen, in der ein Auswerfer 33 mit einem Auswerferstift 34 verschiebbar angeordnet ist, der in einer bis zur Aussparung 31 reichenden Bohrung geführt ist. Auf der Rückseite des Auswerfers 33 ist eine in der Grundplatte 30 geführte Stange 35 befestigt, die mit einem Betätigungsmechanismus für den Auswerfer 33 verbunden ist.

Zum Aufbereiten einer gebrauchten Elektrodenkappe 8 wird diese zunächst in der aus Fig. 7 ersichtlichen Weise mit ihrer Bohrung 3 auf den Kopf 28 des Stempels 27 aufgesetzt. Anschließend wird die Stempelhalterplatte 23 hochgefahren, wodurch das die Arbeitsfläche aufweisende Ende der gebrauchten Elektrodenkappe 8 in die Aussparung 31 der Matrize 29 eintritt und die gebrauchte Elektrodenkappe 8 in der Weise umgeformt wird, daß sie die durch die Aussparung 31 festgelegte Außenkontur erhält. Ein derartiger Prozeß wird in der Umformtechnik als Nachschlagen oder auch Fließpressen bezeichnet und läuft im Gegensatz zu einer spanenden Bearbeitung ohne jeden Gewichtsverlust ab. Nach der Umformung wird der Stempel 27 wieder herabgefahren und die Elektrodenkappe mittels des Auswerfers 33 ausgestoßen. Die aufbereitete Elektrodenkappe kann dann sofort wieder verwendet werden.

Obwohl die Aussparung 31 der genormten Außenkontur der Elektrodenkappen angepaßt ist und auch der Innenquerschnitt der Bohrung 3 einen genormten, zylindrischen oder konischen Verlauf hat, kann sich zwischen der Achse der Bohrung 3 und der Achse der Außenkontur der Elektrodenkappe eine Exzentrizität ergeben. Diese Exzentrizität kann z. B. eine Folge ungleichmäßiger Wandstärken der Elektrodenkappen sein und hat normalerweise zur Folge, daß der Stempel 27 bei den hohen verwendeten Drücken von z. B. 3 bis 6 $\times$ 10$^4$ kp nach kurzer Zeit zerstört wird. Durch die erfindungsgemäße schwimmende Lagerung des Stempels 27 bzw. der Stempelaufnahme 25 wird dies jedoch vermieden, da der Stempel 27 beim Eindringen der Elektrodenkappe 8 in die Aussparung 31 seitlich ausweisen kann, wenn die Achse der Bohrung 3 nicht mit der Achse der Aussparung 21 zusammenfällt.

Anstelle der beschriebenen Presse können solche mit mehreren Stempeln und Matrizen oder solche mit Rundtischen vorgesehen sein, die eine Automatisierung des Einlege-, Umform- und Auswerfprozesses ermöglichen. Außerdem können Pressen vorgesehen sein, die einen ortsfesten Stempel und eine bewegbare Matrize oder bewegliche Stempel und Matrizen aufweisen. Schließlich wäre es zweckmäßig, den Stempel 28 und/oder die Stempelaufnahme 25 mit einer Auflageschulter zu versehen, die sich beim Nachschlagen auf den in Fig. 3 unteren, zylindrischen Umfangsrand der eingelegten Elektrodenkappe aufliegt, um eine Kragenbildung in diesem Bereich zu vermeiden.

Bei der anhand Fig. 7 beschriebenen Verfahrensweise wird die Elektrodenkappe in einem einstufigen Prozeß aufbereitet. Dabei besteht die Gefahr, daß ihr Ansatz 4 (Fig. 1) bei mehrfacher Aufbereitung immer dünner bzw. die Blindbohrung 3 immer länger wird, was die Elektrodenkappe schließlich unbrauchbar macht. Außerdem führt dies zu Problemen bei der Aufbereitung von Elektrodenkappen, die unterschiedlich oft aufbereitet wurden.

Erfindungsgemäß wird daher ein zweistufiges Aufbereitungsverfahren vorgeschlagen, bei dessen erster Stufe die Vorrichtung nach Fig. 8 benutzt wird, um alle Elektrodenkappen zunächst derart zu stauchen, daß sie eine von ihrer Vorgeschichte unabhängige Form annehmen, und bei dessen zweiter Stufe die Vorrichtung nach Fig. 7 wie beschrieben angewendet wird.

Die Vorrichtung nach Fig. 8 enthält eine ortsfeste Zentrierplatte 38, an der eine Stempelhalteplatte 39 befestigt ist, die eine Aussparung 40 aufweist, in der eine Stempelaufnahme 41 schwimmend gelagert und axial festgelegt ist. Die Stempelaufnahme 41 hält einen Stempel 42, dessen die Stempelaufnahme überragender Kopf 43 einen Außenquerschnitt besitzt, der etwas kleiner als der Innenquerschnitt der Bohrungen 3 der aufzubereitenden Elektrodenkappen, jedoch so groß ist, daß in der zweiten Stufe noch der Kopf 28 des Stempels 27 in die Bohrung 3 eingeführt werden kann. Außerdem ragt der Kopf 43 im Vergleich zu Fig. 7 etwas weniger über die Stempelaufnahme 41 hinaus. Nach dem Aufsetzen einer Elektrodenkappe auf die Stempelaufnahme bleibt daher sowohl zwischen dem Ende des Kopfs 43 und dem Ansatz 4 als auch zwischen der Mantelfläche des Kopfs 43 und dem Innenmantel des Schafts 2 der Elektrodenkappe jeweils ein kleiner Zwischenraum frei.

Die Vorrichtung nach Fig. 8 weist weiter eine Matrizenhalteplatte 45 auf, die am hin- und herbewegbaren Stößel der Exzenterpresse od. dgl. befestigt ist und parallel zu ihrer Bewegungsrichtung verlaufende, in Richtung der Stempelaufnahme 41 ragende Führungssäulen 46 aufweist. Auf diesen Führungssäulen 46 ist mittels Bohrungen 47 eine Matrize 48 verschiebbar gelagert, die mit Hilfe von Federn 49, z. B. Gummi-oder Tellerfedern, normalerweise mit Abstand zur Matrizenhalteplatte 45 gehalten ist, jedoch gegen die Kraft der Federn 49 an diese angenähert werden kann. Die Matrize 48 weist eine zentrale Aussparung 50 auf, deren Querschnitt dem Schaftquerschnitt der aufzubereitenden Elektrodenkappen entspricht oder etwas größer als dieser ist. Außerdem ist die Matrize 48 mit einem in der Aussparung 50 verschiebbar gelagerten und einen entsprechenden Außenquerschnitt aufweisenden Matrizenteil 51 versehen, das an dem dem Stempel 42 zugewandten Ende eine etwa kalottenförmige Außenkontur 52 besitzt und mit seinem entgegengesetzten Ende an einer Führungsstange 53 befestigt ist, die in einer koaxialen Verlängerung der Bohrung 50 gelagert ist, in einem mittleren Abschnitt einen verbreiterten Kragen 54 aufweist und mit ihrem vom Matrizenteil 51 abgewandten Ende verschiebbar in der Matrizenhalteplatte 45 liegt. Dabei ist der Kragen 54 derart in einer Aussparung 55 der Matrize 48 gelagert, daß er beim Herunterfahren der Matrizenhalteplatte 45 von dieser mitgeführt wird, während er sich beim Hochfahren der Matrizenhalteplatte 45 gegen die Matrize 48 legt und dann von dieser mitgenommen wird. Schließlich weist die Matrize 48 eine zur Bohrung 50 achsparallele Bohrung 56 auf, die von einem an der Matrizenhalteplatte 45 befestigten Rückholbolzen 57 durchragt ist. Dieser besitzt an seinem der Stempelaufnahme zugewandten Ende einen Kopf 58, der in einem verbreiterten Teil der Bohrung 56 angeordnet ist.

Zur Aufbereitung einer Elektrodenkappe 59 wird diese zunächst mit ihrer Bohrung auf den Kopf 43 des Stempels 42 aufgesetzt. Anschließend wird die Matrizenhalteplatte 45 herabgesenkt, bis sich die Matrize 48 gegen die Stempelaufnahme 41 legt und die Elektrodenkappe 59 innerhalb der Bohrung 50 angeordnet ist. Das Matrizenteil 51 ist zu diesem Zeitpunkt noch von der Elektrodenkappe beabstandet. Beim weiteren Absenken der Matrizenhalteplatte 45 wird nun zunächst die Feder 49 gespannt, bis sich schließlich das Matrizenteil 51 mit seiner kalotten-förmigen Unterseite auf die Elektrodenkappe 59 auflegt. Beim weiteren Vorschieben der Matrizenhalteplatte 45 wird die Elektrodenkappe 59 daher in die aus Fig. 8 ersichtliche Form gestaucht. Die Matrizenhalteplatte 45 wirkt bei diesem Stauchvorgang auf den Kragen 54 der Führungsstange 53 ein.

Anschließend wird die Matrizenhalteplatte 45 wieder angehoben, wodurch erst die Feder 49 entspannt und anschließend die Matrize 48 mittels des Rückholbolzens 57 mitgenommen wird. Wird dabei die Führungsstange 53 festgehalten, bleibt der Kragen 54 in seiner untersten Stellung stehen, so daß die in der Bohrung 50 befindliche Elektrodenkappe 59 vom Matrizenteil 51 nach unten hin ausgeworfen wird. Schließlich wird die Führungsstange wieder freigegeben, so daß sich der Kragen 54 beim weiteren Hochfahren der Matrize gegen diese legt und dann mitgenommen wird, um den Kopf 43 des Stempels 42 zur Auflage der nächsten Elektrodenkappe freizugeben. Die erste Stufe des erfindungsgemäßen Verfahrens ist damit beendet.

Die mittels der Vorrichtung nach Fig. 8 vorbereiteten Elektrodenkappen, deren Form unabhängig von ihrer Vorgeschichte, insbesondere der Zahl der bereits vorgenommenen Aufbereitungen ist, werden nun die Vorrichtung nach Fig. 7 eingelegt und dort auf die beschriebene Weise weiter bearbeitet, damit sie die durch die Aussparung 31 der Matrize 29 vorgegebene Form annehmen. Nach Abschluß dieser zweiten Stufe des erfindungsgemäßen Verfahrens ist die Elektrodenkappe aufbereitet. Dabei ist es im Prinzip gleichgültig, ob die Elektrodenkappen nach der Aufbereitung dieselbe äußere Form aufweisen, die sie ursprünglich hatten, oder eine andere gewünschte Form annehmen. Eine andere Form könnte beispielsweise dadurch erhalten werden, daß bei der Vorrichtung nach Fig. 7 während des Hochfahrens des Stempels 27 der Auswerferstift 34 in einer etwas zurückgezogenen Stellung gehalten wird. Dies hätte zur Folge, daß die Elektrodenkappe 8 nicht nur die durch die Matrizenform festgelegte Form annimmt, sondern zusätzlich mit einem Ansatz 12 entsprechend Fig. 5 versehen wird.

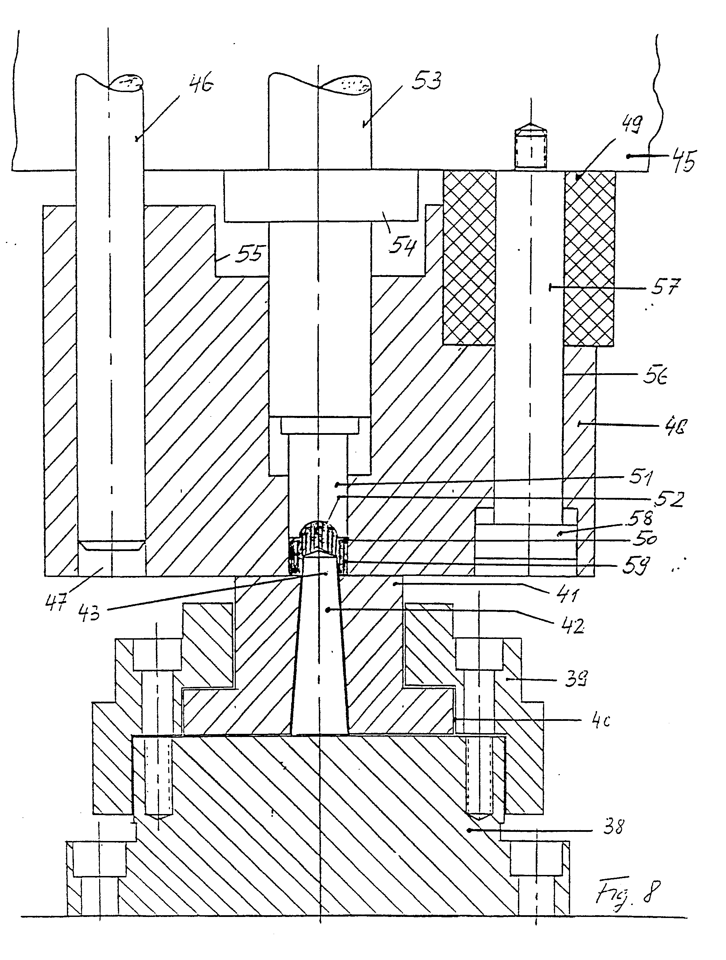

Wesentlich für das erfindungsgemäße Verfahren ist, daß die Formgebung in der Matrize so erfolgt, daß die beim vorhergehenden Schweißen erhaltenen Diffusions- und/oder Legierungsschichten bzw. die auf der wirksamen Arbeitsfläche abgelagerten Schichten weitgehend erhalten bleiben. Fig. 9 bis 14 zeigen dies schematisch. In Fig. 9 ist eine neue Elektrodenkappe 60 dargestellt, deren wirksame Arbeitsfläche 61 leicht gerundet und noch frei von irgendwelchen Legierungs- oder Diffusionsschichten ist. In Fig. 10 ist dieselbe Elektrodenkappe 60 nach dem Gebrauch dargestellt. Sie enthält eine abgeflachte Arbeitsfläche 62 (die ursprüngliche Arbeitsfläche 61 ist strichpunktiert dargestellt), und dicht unterhalb der Arbeitsfläche 62 hat sich eine Legierungs- und/oder Diffusionsschicht 63 gebildet, da je nach der Art der zu verschweißenden Bleche und deren Oberflächenbeschichtungen Eisen, Kupfer, Aluminium, Zink, Chrom, Blei od. dgl. bis zu einer Tiefe von beispielsweise zwanzig bis fünfzig Mikrometer unter die Oberfläche diffundiert sind und dort ggf. Legierungen oder Oxide gebildet haben. Auf der Arbeitsfläche 62 kann sich außerdem Kohlenstoff bis zu einer Schichtdicke von beispielsweise zwei Mikrometer abgelagert haben. In Fig. 11 ist die Elektrodenkappe 60 schließlich nach der einstufigen Aufbereitung mit der Vorrichtung nach Fig. 7 dargestellt. Sie enthält eine neue wirksame Arbeitsfläche 64 und eine darunter liegende Diffusions- und Legierungsschicht 65. Wesentlich dabei ist, daß das die Legierungs- und Diffusionsschicht 63 bildende Material beim Fließpreßvorgang zum größten Teil wieder in die Spitze der Elektrodenkappe 60 fließt und damit erhalten bleibt, d. h. daß die Schicht 65 aus einem Teil der Schicht 63 besteht. Die aufbereitete Elektrodenkappe 60 weist daher im wirksamen Bereich ihrer Arbeitsfläche 64 alle für den erneuten Gebrauch vorteilhaften Eigenschaften auf.

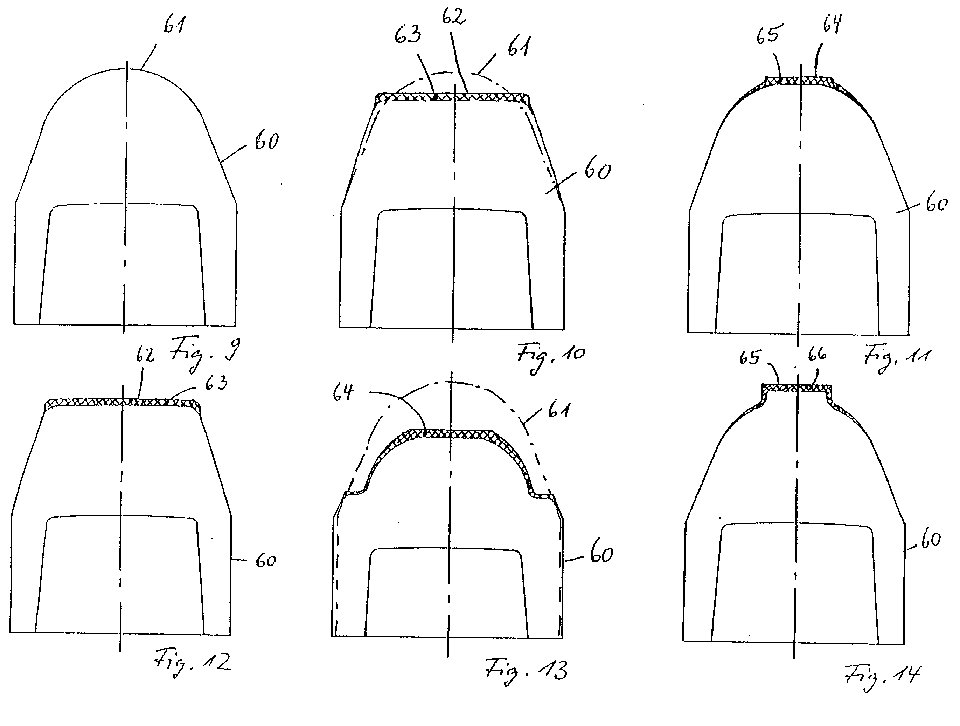

Fig. 12 bis 14 zeigen schematisch die Verhältnisse bei Ausübung des zweistufigen Verfahrens. In Fig. 12 ist die Elektrodenkappe 60 wiederum nach ihrem Gebrauch dargestellt (vgl. auch Fig. 10). Fig. 13 zeigt dieselbe Elektrodenkappe 60 nach ihrer Behandlung mit der Vorrichtung nach Fig. 8, in der sie einem axialen Stauchprozeß unterworfen und in radialer Richtung geringfügig verbreitert wurde. Dabei haben sich die Diffusions- und Legierungsschichten 63 lediglich nach unten verschoben, d. h. die gestauchte Elektrode besitzt auf ihrer Oberfläche eine Schicht 64, die hinsichtlich ihrer Eigenschaften der Schicht 63 entspricht, jedoch eine andere Form aufweist. Fig. 14 zeigt schließlich die Elektrodenkappe 60 nach ihrer zusätzlichen Bearbeitung in der Vorrichtung nach Fig. 7. Sie enthält nun eine wirksame Arbeitsfläche 65 mit darunter liegenden Diffusions- und Legierungsschichten 66. Diese Schichten 66 stellen einen Teil der Diffusions- und Legierungsschichten 63 bzw. 64 dar und besitzen daher dieselben Eigenschaften wie diese, wie es für den nachfolgenden Schweißprozeß erwünscht ist. Entsprechende Verhältnisse ergeben sich für auf den Arbeitsflächen abgelagerte Kohlenstoffschichten, die in Fig. 11 bis 14 nicht einzeln dargestellt wurden.

Es wird angenommen, daß sich Vorteile der Erfindung wie folgt erklären lassen :

Dadurch, daß die Elektrodenkappen beim Schweißvorgang ständig mit den zu verschweißenden Blechen in Kontakt sind, diffundieren einerseits Metall- und ggf. Kohlenstoffpartikel in deren Arbeitsflächen, während andererseits auf der Blechoberfläche vorhandene Öle und andere Verunreinigungen, die aufgrund der hohen Temperaturen verkoken, Kohlenstoffablagerungen auf den Arbeitsflächen verursachen. Eine Folge davon sind Änderungen der Übergangswiderstände und Aufhärtungen im Bereich der wirksamen Teile der Arbeitsflächen. Diese Prozesse spielen sich allerdings nur innerhalb der ersten zwei- oder dreihundert Schweißungen ab, bis eine Art Sättigung eingetreten ist, und führen dann im wirksamen Bereich der Arbeitsflächen der Elektrodenkappen zu stabilen Verhältnissen. Eine weitere Folge derartiger Diffusions- und Legierungsprozesse ist, daß die Härte der Elektrodenkappen unmittelbar auf ihrer Arbeitsfläche schon nach wenigen Schweißungen größer als die Ausgangshärte der z. B. aus Kupfer, Chrom und Zirkon bestehenden Legierung ist, während sich in geringen Abständen von der Arbeitsfläche der Elektrodenkappen sogenannte Härtesenken bilden, in denen die Härte wesentlich kleiner als die Ausgangshärte ist. Eine neue Elektrodenkappe arbeitet daher erst dann zufriedenstellend, wenn die erwähnten konstanten Verhältnisse eingestellt sind. Werden neue Elektrodenkappen eingesetzt, müssen diese konstanten Verhältnisse erst in einigen hundert Schweißungen hergestellt werden. Werden gebrauchte Elektrodenkappen einer spanenden Bearbeitung oder bekannten Umformungsprozessen unterzogen, wird die Oberfläche der Elektrodenkappen gerade in dem durch Legierung oder Diffusion stabilisierten Bereich abgetragen oder verändert, so daß einerseits die konstanten Verhältnisse erst wieder hergestellt werden müssen, andererseits die Materialabtragung möglicherweise im Bereich einer Härtesenke beendet wird, was bei erneuter Ingebrauchnahme einen erhöhten Verschleiß zur Folge hat. Die erfindungsgemäße Aufbereitung läßt die Elektrodenkappen dagegen vor allem im wirksamen Bereich ihrer Arbeitsflächen unverändert, so daß die durch vorherige Benutzung bereits hergestellten konstanten Verhältnisse erhalten bleiben und daher bei erneuter Ingebrauchnahme bereits vorliegen.

Diese beim Schweißen von Stahlblechen beobachtbaren Phänomene treten beim Verschweißen von beschichteten Blechen, z. B. von mit Aluminium beschichteten, verzinkten oder mit anderen Metall- oder leitenden Kunststoffbeschichtungen versehenen Blechen, verstärkt auf. Beim Verschweißen solcher Bleche mit frischen oder durch spanende Bearbeitung aufbereiteten Elektrodenkappen wird beispielsweise beobachtet, daß die Beschichtungen, die die Korrosionswerte und andere Eigenschaften der Bleche verbessern sollen, gerade im Bereich der Kontaktpunkte mit den Elektrodenkappen verstärkt abgetragen werden und daher beispielsweise Anlaß zu Roststellen geben, während dies bei Anwendung der erfindungsgemäß aufbereiteten Elektrodenkappen nicht oder nur vereinzelt festzustellen ist. Auch hier wird eine Erklärung darin gesehen, daß eine bereits mit einer Legierungsschicht versehene, z. B. erfindungsgemäß aufbereitete Elektrode, wenig Neigung besitzt, von den zu verschweißenden Blechen durch Diffusion od. dgl. Zink oder Aluminium abzutragen, während neue oder spanend aufbereitete Elektrodenkappen, in denen derartige Legierungsschichten erst noch gebildet werden müssen, gerade im Verlauf der ersten Schweißungen noch nicht gesättigt sind und daher einen großen Anteil des Materials aufnehmen können, mit denen die zu verschweißenden Bleche beschichtet sind.

Die Erfindung ist nicht auf die beschriebenen Ausführungsbeispiele beschränkt, die sich auf vielfache Weise abwandeln lassen. So könnte beispielsweise eine Presse verwendet werden, die im Gegensatz zu Fig. 7 und 8 nicht vertikal, sondern horizontal arbeitet. Weiter ist es auch bei der Vorrichtung nach Fig. 8 möglich, den Stempel zu bewegen und die Matrize ortsfest zu halten. Schließlich könnte in Fig. 7 und 8 die Matrize unten und der Stempel oben angeordnet werden und die aufzubereitende Elektrodenkappe zunächst nicht auf den Stempel aufgesetzt, sondern in die Aussparung der Matrize eingelegt werden.

Weiterhin kann die Form der aufbereiteten Elektrode mit der Form der ursprünglichen Elektrode übereinstimmen oder auch von dieser abweichen. Schließlich kann das Verfahren zur Aufbereitung in mehr als zwei Stufen durchgeführt werden, falls sich dies als zweckmäßig oder erforderlich erweist, um die Erhaltung der Diffusions- und/oder Legierungsschichten unter bzw. der Ablagerungen auf der Arbeitsfläche sicherzustellen.

**Patentansprüche**

1. Verfahren zum Aufbereiten gebrauchter Punktschweißelektroden (1, 8) für das Widerstandsschweißen, bei dem diese jeweils in ein Umformwerkzeug gepreßt werden, das aus einem Gesenk mit einer Aussparung besteht, dessen Querschnitt der Punktschweißelektrode (1, 8) entspricht, dadurch gekennzeichnet, daß das Gesenk eine Matrize (29) ist, deren Aussparung (31) vollständig mit der äußeren erwünschten Form der aufbereiteten Punktschweißelektrode übereinstimmt, und ein Stempel (27) mit einem Kopf (28), dessen Außenform einer Blindbohrung (3) in der Punktschweißelektrode (1, 8) angepaßt ist, sich zentrierend in die Blindbohrung, (3) eingeführt wird und dann die Punktschweißelektrode (1, 8) mit dem Stempel (27), sich in der Matrize (29) zentrierend, in diese gepreßt wird.

2. Verfahren nach Anspruch 1, dadurch gekennzeichnet, daß die Punktschweißelektrode (1, 8) in einem zweistufigen Verfahren umgeformt wird, wobei beide Stufen in gleicher Weise ausgeführt werden, jedoch in der ersten Stufe ein erster Stempel (43) verwandt wird, dessen Kopf einen etwas kleineren Innenquerschnitt als die nachfolgende Matrize (29) hat und etwas kürzer als diese ist, und eine Matrize (48) mit einer Bohrung (50) verwandt wird, deren Querschnitt etwas größer als der Schaftquerschnitt der endgültig aufbereiteten Punktschweißelektrode bzw. der nachfolgenden Matrize (29) ist und deren Stirnprofil vorzugsweise kalottenförmig ist.

3. Vorrichtung zum Aufbereiten gebrauchter Punktschweißelektroden (1, 8), bestehend aus einer Presse in der in einem Umformwerkzeug ein Stempel (27, 42), der einen Kopf hat, dessen Form einer Blindbohrung (3) in der Punktschweißelektrode (1, 8) entspricht, und in der eine Matrize (29, 48), die eine Aussparung (21, 50) hat, die der Außenform der erwünschten Elektrodenform entspricht, angeordnet ist, dadurch gekennzeichnet ist, daß der Stempel (27, 42), seitlich schwimmend gelagert ist um ein solches Spiel, das einer maximaler Exzentrizität der Blindbohrung (3) gegenüber der Außenform einer gebrauchten Punktschweißelektrode (1, 8) entspricht.

4. Vorrichtung nach Anspruch 3, dadurch gekennzeichnet, daß das Umformwerkzeug aus zwei ähnlichen Teilwerkzeugen aufgebaut ist, wobei im ersten Teilwerkzeug ein Stempel (48) angeordnet ist, der einen etwas geringern Querschnitt als der Stempel (27) im zweiten Teilwerkzeug hat und dessen Kopf etwas kürzer als derjenige im zweiten Teilwerkzeug ist, und daß die Matrize (48) im ersten Teilwerkzeug etwas weiter als die im zweiten ist.

5. Vorrichtung nach Anspruch 4, dadurch gekennzeichnet, daß die Aussparung der Matrize (48) des zweiten Teilwerkzeuges durch eine Bohrung (50) und ein in dieser verschiebbar gelagertes stirnseitiges Matrizenteil (51) gebildet ist, das vorzugsweise eine kalottenförmige Vertiefung trägt.

**Claims**

1. Process for reconditioning used spot welding electrodes (1, 8) being pressed in a reshaping tool consisting of a forming tool having a cavity the cross section of which equals to the cross section of the spot welding electrode (1, 8), characterized in that the forming tool being a die (29), the cavity (31) of which is corresponding to the external desired shape of the reconditioned spot welding electrode and further that a punsh (27) having a head (28), the external shape of which matches into a blind bore (3) in the spot welding electrode (1, 8), is introduced into said blind bore (3) while being centered therein and afterwards the spot welding electrode (1, 8) is pressed by means of the punsh (27) into the die (29) while the spot welding electrode (1, 8) being centered in the die (29).

2. Process according to claim 1, characterized in that the spot welding electrode (1, 8) being reshaped in a two step process, whereby both steps are performed in the same way, but in the first step a first punsh (43) being used, the head of which has a slightly smaller inner cross section than the die (29) being used in the second step and being slightly shorter than the said die (29), and further in the first step a die (48) being used having a bore (50) the cross section of which is slightly larger than the cross section of the shaft of the spot welding electrode after the reconditioning being finished, respectively of the die (29) being used in the second step, and further the die (48) which is used in the first step, having a cavity profile which preferably is consisting of a section of a hollow sphere.

3. Apparatus for the reconditioning of used spot welding electrodes (1, 8) consisting of a press in which in a reshaping tool comprising a punsh (27, 42) is arranged, having a head the shape of which matches to a blind bore (3) being located in the spot welding electrode (1, 8) and further in which a die (29, 48) is arranged having a cavity (21, 50) corresponding to the desired shape of the spot welding electrode, characterized in that the punsh (27, 42) is sideways floatingly mounted with a tolerance being equal to the maximal excentricity of the blind bore (3) in relation to the outer shape of a worn out spot welding electrode (1, 8).

4. Apparatus according to claim 3, characterized in that the reshaping tool is consisting of two similar tool arrangements, the first of which having a first punsh (48) the cross section of which is slightly smaller than the cross section of the punsh (27) of the second tool arrangement,

and further the head of the first punsh (48) is slightly shorter than the one in the second tool arrangement, and further the die (48) of the first tool arrangement is slightly wider than the die of the second tool arrangement.

5. Apparatus according to claim 4, characterized in that the cavity of the die of the second tool arrangement is consisting of a bore (50) and a front die portion (51) being mounted displaceably in the bore (50) and having a cavity preferably being a section of a hollow sphere.

**Revendications**

1. Procédé de reconditionnement d'électrodes à souder par points usagées (1, 8) aux fins de soudage par résistance, procédé selon lequel ces électrodes sont pressées dans un outil de remaniage composé d'une forme évidée, dont la section transversale correspond à l'électrode à souder par points (1, 8), caractérisé par le fait que la forme évidée est une matrice (29) dont l'évidement (31) correspond entièrement à la forme extérieure désirée de l'électrode à souder par points reconditionnée, et qu'un poinçon (27), pourvu d'une tête (28) dont la forme extérieure est adaptée à une forure borgne (3), pratiquée dans l'électrode (1, 8), est introduit, centralement, dans la forure borgne (3), ce après quoi l'électrode à souder par points (1, 8) est pressée à l'aide du poinçon (27) dans la matrice (29), dans laquelle elle se centre.

2. Procédé selon la spécification 1, caractérisé par le fait que l'électrode à souder par points (1, 8) est remaniée au cours d'un processus à deux phases exécutées de même manière, la première phase utilisant cependant un premier poinçon (43), muni d'une tête dont la section transversale intérieure est un peu plus petite que la matrice suivante (29) et la longueur légèrement inférieure à celle de cette matrice, et une matrice (48) pourvue d'une forure (50) dont la section transversale est un peu plus grande que la section transversale de la queue de l'électrode à souder par points définitivement reconditionnée, respectivement de la matrice suivante (29), et dont le profil apparent présente de préférence la forme d'une calotte.

3. Appareil pour le reconditionnement d'électrodes à souder par points usagées (1, 8), composé d'une presse, dans laquelle un poinçon (27, 42), pourvu d'une tête dont la forme correspond à une forure borgne (3), pratiquée dans l'électrode à souder par points (1, 8), et une matrice (29, 48) pourvue d'un évidement (21, 50) correspondant à la forme extérieure désirée de l'électrode, sont disposés dans un outil de remaniage, caractérisé par le fait que le poinçon (27, 42) est logé latéralement en montage flottant ce qui assure un jeu correspondant à une excentricité maximale de la forure borgne (3) par rapport à la forme extérieure d'une électrode à souder par points usagée (1, 8).

4. Appareil selon spécification 3, caractérisé par le fait que l'outil de remaniage est conçu à base de deux outils partiels analogues, le premier outil partiel comprenant un poinçon (48) dont la section transversale est légèrement inférieure à celle du poinçon (27) disposé dans le second outil partiel, et dont la tête est un peu plus courte que celle de celui du second outil partiel, et que la matrice (48) du premier outil partiel est un peu plus étendue que celle du second.

5. Appareil selon spécification 4, caractérisé par le fait que l'évidement de la matrice (48) du second outil partiel est formée par une forure (50) et une pièce de matrice (51) frontale, montée de sorte à être déplaçable dans cette forure, pièce de matrice présentant une cavité de préférence en forme de calotte.

Fig. 1

Fig 2

Fig. 3

Fig. 4

Fig 5

Fig. 6

1

Fig. 7

Fig. 8

Fig. 9

Fig. 10

Fig. 11

Fig. 12

Fig. 13

Fig. 14

0 120 431